# NEW EUROPEAN PATENT SPECIFICATION

(11) **EP 3 200 618 B2**
(45) Date of publication and mention of the opposition decision: **12.06.2024**
(45) Mention of the grant of the patent: 04.08.2021
(21) Application number: 15770922.1
(22) Date of filing: 29.09.2015
(51) Int. Cl.: A23L 33/115, A23L 33/12, A23L 33/00

(54) **NUTRITIONAL COMPOSITION FOR USE IN PROMOTING LIVER MATURATION**
ERNÄHRUNGSZUSAMMENSETZUNG ZUR VERWENDUNG BEI DER FÖRDERUNG VON LEBERREIFUNG
COMPOSITION NUTRITIONNELLE POUR L'UTILISATION DANS LA PROMOTION DE LA MATURATION DU FOIE

(30) Priority: 30.09.2014 EP 14187059
(43) Date of publication of application: 09.08.2017
(73) Proprietor: Société des Produits Nestlé S.A., 1800 Vevey (CH)
(72) Inventor: THAKKAR, Sagar, 1817 Brent (CH); GARCIA-RODENAS, Clara Lucia, 1072 Forel (CH); NAGY, Kornél, 1005 Lausanne (CH); LE, Kim-Anne, 1004 Lausanne (CH); WOOSTER, Timothy James, 1066 Epalinges (CH)
(74) Representative: Plougmann Vingtoft a/s
(86) International application number: PCT/EP2015/072389
(87) International publication number: WO 2016/050752

(56) References cited:
- EP-A1- 2 767 175
- EP-A2- 0 484 266
- EP-B1- 1 007 691
- EP-B1- 1 996 031
- WO-A1-00/35443
- US-A1- 2004 219 188
- ALVAREZ-SOLA GLORIA ET AL: "Fibroblast growth factor 15/19 (FGF15/19) protects from diet-induced hepatic steatosis: development of an FGF19-based chimeric molecule to promote fatty liver regeneration", GUT MICROBIOTA, vol. 66, no. 10, 24 January 2017 (2017-01-24), pages 1818-1828, XP055778752, UK ISSN: 0017-5749, DOI: 10.1136/gutjnl-2016-312975
- FERNÁNDEZ et al.: "Steatosis and Collagen Content in Experimental Liver Cirrhosis Are Affected by Dietary Monounsaturated and Polyunsaturated Fatty Acids", Scandinavian Journal of Gastroenterology, vol. 32, no. 4, 1997, pages 350-356,

## Description

### Technical field of the invention

The present invention relates to synthetic nutritional compositions for use to promote the maturation of the liver and/or reduce the risk of live disease. The compositions according to the invention have low medium chain fatty acid (MCFA) content and low palmitic acid content.

### Background of the invention

Recovery from illness requires adequate nutrition, but critically ill patients may develop feeding intolerance. Health care providers typically interrupt enteral feeds and resort to parenteral feeding in order to provide the patient with the required nutrition.

However, parenteral nutrition is not without drawbacks. It increases the risk of line associated infections and sepsis, hepatic disease and other co-morbidities. Feeding intolerance may also develop in vulnerable infants and/or young children, such as infants and/or young children with low birth weight, who are critically ill, who were born preterm, who experienced intra-uterine growth retardation and/or who suffered from growth delays due to disease and/or malnutrition.

In the case of vulnerable infants, especially pre-term infants, feeding intolerance is essentially due to immaturity of the gastrointestinal tract. The immature gastrointestinal motility leads to slow transit, gastric emptying is delayed, leading the bolus to accumulate in the stomach (i.e. gastric residuals) and hindering the continuation of enteral nutrition. These infants have also particularly low levels of digestive enzymes and bile salts, as well as a limited absorptive capacity. As a consequence, nutrient digestion and absorption, in particular that of fat, is suboptimal and a large proportion of the energy and nutrient intake is lost in faeces.

EP2767175 relates to a liquid nutritional composition for improving gut barrier function comprising lipids with short chain fatty acyl chains and non-digestible, fermentable saccharides.

EP1996031 relates to a method for feeding low birthweight infants (LBW infants), very low birthweight infants (VLBW infants), extremely low birthweight infants (ELBW infants) and preterm infants for improving oral tolerance.

Liver function is immature in preterm infants, and hepatic dysfunction is frequent in preterm infants, affecting up to 50% of extremely low birth weight (ELBW) infants. Both preterm infants and older patients receiving parenteral feeding for longer than a few weeks have the highest risk of suffering from life-threatening hepatobiliary disorders, ranging from cholestasis to end-stage liver disease.

Hence, an improved nutritional composition that enables the convenient, safe and accurate delivery of the most adequate nutrition in particular to patients who have developed or are at risk of developing feeding intolerance is desired, and in particular nutritional compositions which avoid the risks of parenteral feeding and/or which accelerates the time to full enteral feeding when enteral and parenteral nutrition is simultaneously provided would be advantageous.

### Summary of the invention

The present inventors have found surprisingly that the synthetic nutritional compositions according to the invention are emptied more rapidly from the stomach, despite having a high content of LCFAs relative to MCFAs. Thus, the synthetic nutritional compositions of the present invention make it possible to provide the benefits of LCFAs without slowing gastric emptying.

Furthermore, the compositions according to the invention display increased stimulation of gut digestive capacity as well as of gut hormones [e.g. Fibroblast growth factor 19 (FGF-19) and cholecystokinin (CCK)].

Thus, the invention relates to a synthetic nutritional composition capable of being emptied more rapidly from the stomach upon consumption in an individual comprising, with respect to the total fats:
- medium-chain fatty acids, at least 98% in the form of triglycerides, in an amount in the range of 0 to 15 wt%,
- oleic acid, at least 98% in the form of triglycerides, in an amount of at least 35 wt%, in respect of total fat;
- palmitic acid, at least 98% in the form of triglycerides, in an amount in the range of not more than 13%;
wherein said synthetic nutritional composition is an infant formula; a fortifier; a starter formula; a follow-on formula; or a supplement or complement; further comprising a protein source and/or a carbohydrate source;
for use to promote the maturation of the liver, or to reduce the risk of liver disease in a preterm infant born at less than 37 weeks gestational age, or in a low birth weight infant having a body weight under 2500 g at birth.

In one aspect, the composition for use as mentioned above is useful in reducing the accumulation of gastric residuals, and/or improving the tolerance to enteral feeds, and/or reducing the risk of regurgitation and/or vomiting in infants.

### Brief description of the figures

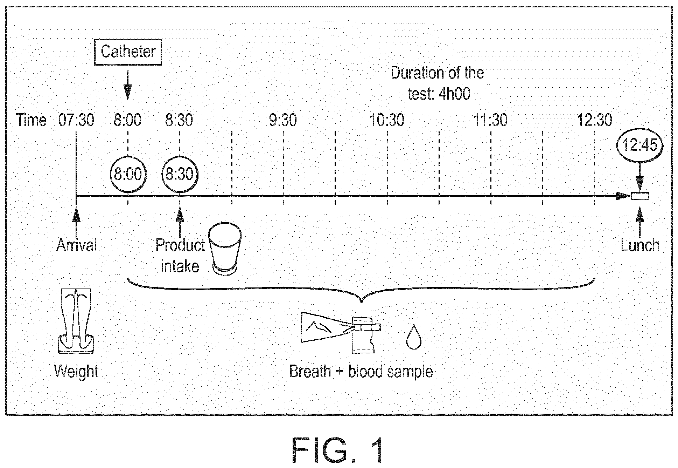

Figure 1 show an overview of the study described in Example 1.

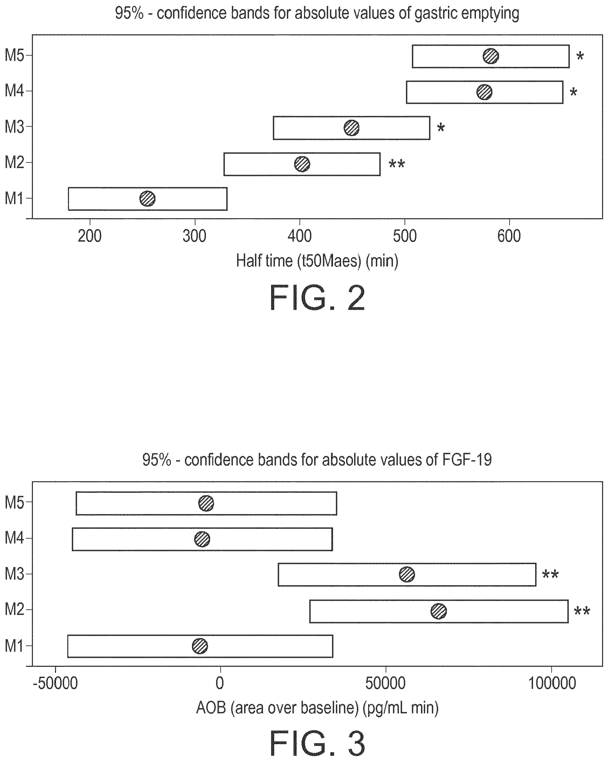

Figure 2 show the results for measurements of gastric emptying in Example 1 . Dots represent the estimated means and the bars the 95% confident interval of the half gastric emptying times after comsumption of the different meals. M= Meal (see Table 1 and Tables 2 to 6 for composition); * indicates P<0.0001; ** indicates P=0.0003. Half time (t50/min)

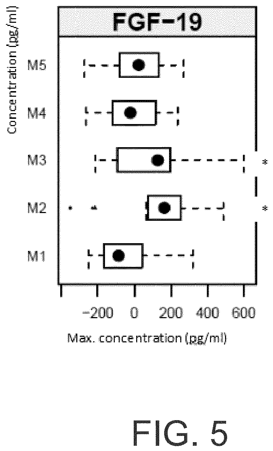

Figure 3 and Fig 5 show the results for measurements of FGF 19 in blood samples taken during the experiments described in Example 1. In figure 3, dots represent the estimated means and the bars the 95% confident interval of the area under the curve of the FGF 19 secretion kinetics, corrected by the FGF19 baseline values. M= Meal (see Table 1 and Tables 2 to 6 for composition); ** indicates P= 0.001. Area over baseline (AOB),(picogram/mL min). Figure 5 is a box plot of the FGF19 maximum levels (picogram/mL) after correction by the FGF19 baseline values. * indicates meals where Mx > M1, p<0.05

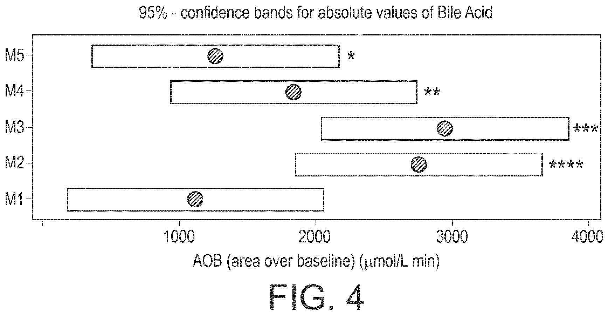

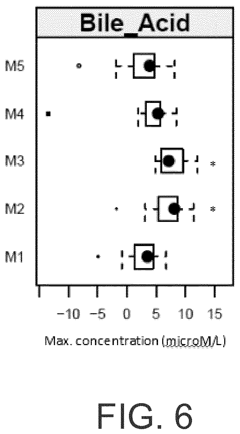

Figure 4 and Fogure 6 show the results for measurement of bile acids in blood samples taken during experiment described in Example 1. In figure 4 dots represent the estimated means and the bars the 95% confident interval of the area under the curve of the bile acid secretion kinetics, corrected by the bile acid baseline values. Area over baseline (AOB), (micromol/L min). * indicates P=0.9; ** indicates P= 0.3; *** indicates P=0.0003; **** indicated P=0.0001. Figure 6 is a box plot of the bile acid maximum levels (micromol/L) after correction by the bile acid baseline values. * indicates meals where Mx > M1, p<0.05.

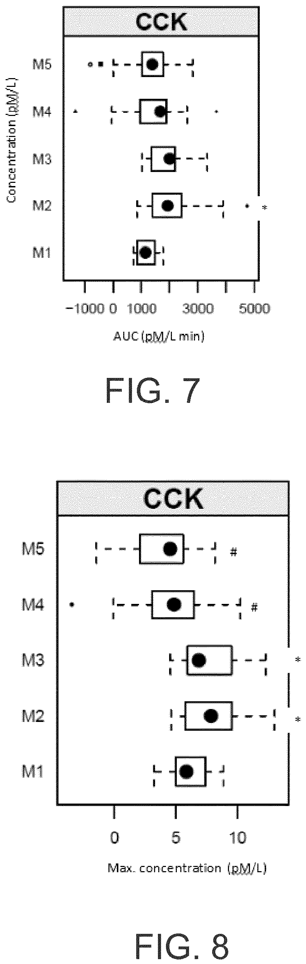

Figure 7 and 8 showsthe results for measurement of cholecystokinin (CCK) in blood samples taken during the experiment described in Example 1 Figure 7 is a box plot of the area under the curve of CCK secretion kinetics, corrected by the bile acid baseline values (picomol/L min) after correction by the CCK baseline values. * indicates meals where Mx > M1, p<0.05. Figure 8 is a box plot of the CCK maximum levels (picomol/L) after correction by the CCK baseline values. * indicates meals where Mx > M1, p<0.05; # indicates meals where Mx < M1, p<0.05.

### Detailed description of the invention

### Definitions

Prior to discussing the present invention in further details, the following terms and conventions will first be defined: The term "synthetic" means obtained by chemical and/or biological means, to the contrary of "natural (found in the nature)", for example not of human origin (e.g. this is not breast milk).

The term "nutritional" means that it nourishes a subject. The synthetic nutritional compositions according to the invention, are typically to be taken by enteral, oro-gastric or nasogastric feeding, and may include a carbohydrate and/or a protein source.

The synthetic nutritional compositions according to the invention may be intended for infants and/or young children, and may be for example be formulated as an infant formula, a growing-up milk, any other milk-based nutritional composition, a supplement (or a complement), a fortifier such as a milk fortifier (e.g. human milk fortifier). The nutritional compositions can be in powder or liquid form.

The term "supplement" means a nutritional composition which typically provides the selected nutrients while not representing a significant portion of the overall nutritional needs of the subject. Typically they do not represent more than 0.1%, 1%, 5%, 10% or 20% of the daily energy need of the subject. Supplements can for example be provided in the form of a pill, a tablet or a powder supplement that can for example be dissolved in water or sprinkled on food. Most preferred is a powder supplement that can be dissolved in liquid or sprinkled on food, most preferably dissolved in water.

The term "complement" means the same as supplement, and the terms are used interchangeably herein.

The expression "infant formula" means a foodstuff intended for particular nutritional use of infants during the first months of life and satisfying by itself the nutritional requirements of this category of person (Article 2(c) of the European Commission Directive 91/321/EEC 2006/141/EC of 22 December 2006 on infant formulae and follow-on formulae). It also refers to a nutritional composition intended for infants and as defined in Codex Alimentarius (Codex STAN 72-1981) and Infant Specialities (incl. Food for Special Medical Purpose). It has to be understood that infants can be fed solely with infant formulas, or that the infant formula can be used as a complement of human milk.

The infant formulas can encompass the starter infant formulas and the follow-up or follow-on formulas. Generally a starter formula is for infants from birth as breast-milk substitute. A follow-up or follow-on formula is typically given from the 6th month onwards. It constitutes the principal liquid element in the progressively diversified diet of this category of person.

The expression "preterm infant formula" means an infant formula intended for a preterm infant.

The term "growing-up milk" are given from one year onwards. It is generally a milk-based beverage adapted for the specific nutritional needs of young children.

The term "fortifier" means a nutritional composition for infants intended to be added to or diluted with an infant formula or with human milk.

The synthetic nutritional composition according to the invention may be a hypoallergenic nutritional composition. The expression "hypoallergenic nutritional composition" means a nutritional composition which is unlikely to cause allergic reactions.

According to the Commission Directive 2006/141/EC of 22 December 2006 on infant formulae and follow-on formulae, articles 1.2 (a) and (b), the term "infant" means a child under the age of 12 months.

The expression "young child" means a child aged between one and three years, also called toddler.

The term "preterm" or "premature" means an infant or young child who was not born at term. Generally, it refers to an infant or young child who was born at less than 37 weeks gestational age. The expressions "infant(s)/young child(ren) born preterm", "infant(s)/young child(ren) who is/are born preterm", "preterm infant(s)/young child(ren)" and "preterms" can be used interchangeably.

A "term infant/young child" refers to an infant or young child born at term. Generally, it refers to an infant or young child who was born at 37 weeks of gestation or after.

By the expression "small for gestational age" or "SGA", it is intended to mean an infant or young child who is smaller in size than normal for their gestational age at birth, most commonly defined as a weight below the 10th percentile for the gestational age. In some embodiments, SGA may be associated with Intrauterine growth restriction (IUGR), which refers to a condition in which a foetus is unable to achieve its potential size.

By the expression "low birth weight", it should be understood as any body weight under 2500g at birth. It therefore encompasses:
- infant or young child who has/had a body weight from 1800 to 2500 g at birth (usually called "low birth weight" or LBW)
- infant or young child who has/had a body weight from 1000 to 1800 g at birth (called "very low birth weight" or VLBW)
- infant or young child who has/had a body weight under 1000 g at birth (called "extremely low birth weight" or ELBW)

Infants or young children with low birth weight may or may not be preterm, and similarly, infants or young children who are small for gestational age may or may not be preterm.

The term "vulnerable infants and/or young children" is used in the present application to refer to infants and/or young children who have or have had development challenges, such as infants and/or young children with at least one of the following features: with LBW, who are critically ill, who were born preterm, who were small for gestational age, who experienced intra-uterine growth retardation and/or who suffer(ed) from growth delays due to disease and/or malnutrition.

The term "critically ill" refers to individuals with a life threatening illness or injury. Such individuals, for example an infant or young child, may require enteral, oro-gastric or nasogastric feeding, intragastric, intraduodenal or intrajejunal, and may be at risk for parenteral feeding.

The expression "medium-chain fatty acid" (or MCFA) refers to n-carboxylic acids of saturated linear aliphatic chains, and are in total comprised of 6-12 carbon atoms. The medium-chain fatty acids of the present invention may be hexanoic acid (comprising 6 carbon atoms, C6:0 also known as caproic acid), octanoic acid (comprising 8 carbon atoms, C8:0, also known as caprylic acid), decanoic acid (comprising 10 carbon atoms or C10:0, also known as capric acid) and/or dodecanoic acid (comprising 12 carbon atoms or C12:0, also known as lauric acid).

In the synthetic nutritional compositions of the invention, the medium-chain fatty acids are present at least 98%, such as more than 98.5%, or more than 99% or more than 99.5% in the form of triglycerides. The term "medium-chain triglycerides" (or MCT) means medium-chain fatty acid esters of glycerol, that is to say a compound formed of a glycerol backbone and three fatty acids, In the case of MCTs, two or three of the fatty acid chains attached to glycerol are medium chain in length. In the context of the present application, the terms "triglyceride", "triacylglyceride" and "triacylglycerol" are used interchangeably and mean the same compound.

The term "MCT oil" refers to a manufactured product comprising medium chain triglycerides.

The expression "long-chain fatty acid" (or LCFA) refers to n-carboxylic acids of saturated or (poly)unsaturated branched or linear aliphatic chains, and are in total comprised of greater than 12 carbon atoms.. Examples of long chain fatty acids include palmitic acid (comprising 16 carbon atoms, or C16:0) and Oleic acid (18:1 cis-9). Similarly, the long-chain fatty acids of the present invention are at least 98%, such as more than 98.5%, or more than 99% or more than 99.5% in the form of triglycerides. The expression "long chain triglycerides" (or LCT) means long chain fatty acid esters of glycerol, that is to say a compound formed of a glycerol backbone and three fatty acids, two or three fatty acid chains attached to glycerol being long chain in length.

The expression "long-chain polyunsaturated fatty acid" (or LC-PUFA) means a polyunsaturated fatty acid (PUFA) having C20 or C22 carbon atoms. Polyunsaturated fatty acids (PUFAs) are unsaturated fatty acids that contain more than one double bond in their backbone.

By the expression "palmitic acid sn 1,3", it is intended to mean palmitic acid esterified in the sn 1,3 position.

By the expression "palmitic acid sn 2"; it is intended to mean palmitic acid esterified in the sn 2 position.

The term "wt%" means percentage by weight. All percentages are by weight of total fat unless otherwise stated.

The term "prebiotic" means non-digestible carbohydrates that beneficially affect the host by selectively stimulating the growth and/or the activity of healthy bacteria such as bifidobacteria in the colon of humans (Gibson GR, Roberfroid MB. Dietary modulation of the human colonic microbiota: introducing the concept of prebiotics. J Nutr. 1995;125:1401-12).

The term "probiotic" means microbial cell preparations or components of microbial cells with a beneficial effect on the health or well-being of the host (Salminen S, Ouwehand A. Benno Y. et al. "Probiotics: how should they be defined" Trends Food Sci. Technol. 1999:10 107-10).

The expression "consists essentially of" means that in addition to those components which are mandatory, other components may also be present in the composition, provided that the essential characteristics of the composition are not materially affected by their presence.

As used in this specification, the words "comprises", "comprising", and similar words, are not to be interpreted in an exclusive or exhaustive sense. In other words, they are intended to mean "including, but not limited to".

The expression "gastric residuals" refers to food from a previous feeding left in the stomach at the start of the next feeding.

### Synthetic nutritional compositions

The nutritional compositions of the invention show increased gastric emptying rate, despite having high amounts of LCFAs (see results in Example 1, and Figure 2).

Additionally, LCFAs have many reported benefits which are also surprisingly achieved by the composition of the invention. Intragastric lipase content is higher in preterms fed with LCFAs-rich formula than with MCFAs formula (Hamosh, 1991). In addition, contrary to LCFA, MCFA-rich meals do not stimulate cholecystokinin (CCK), pancreatic exocrine and bile secretions (Vu, 1999). Furthermore, the superior mesenteric artery (SMA) blood flow is more stimulated with LCFAs than with MCFAs (Vu, 2001). Impaired SAM blood flow is associated with intolerance to enteral feeds in preterms (Fang, 2001; Robel-Tillig, 2004).

However, LCFAs have also been associated with longer gastric emptying times.

Some infants suffer from immature gastrointestinal motility of the gut system which leads to slow transit, delayed gastric emptying, and accumulation of the bolus in the stomach (i.e. gastric residuals).

Thus, it appeared that nutritional compositions based on LCFAs would be contraindicated, based on the assumption that LCFAs would further reduce motility, and/or further increase accumulation of gastric residuals. Indeed, MCTs are widely used in conventional nutritional formulae for infants in order to avoid these issues.

The present invention is based on the surprising finding that certain nutritional compositions comprising relatively high amounts of LCFAs mainly in the form of LCT, actually increase rate of gastric emptying. The compositions of the invention therefore provide a way of supplying the nutritional benefits of LCFAs in vulnerable infants. The absorption of LCFAs was accompanied by an increase in the gut digestive capacity (as reflected by increased bile salt secretion) as well as of gut hormones (i.e. cholecystokinin (CCK)). The increased absorption of LCFAs was also accompanied by an increase in Fibroblast Growth Factor 19 (FGF-19). FGF 19 is an intestinal hormone that can reduce the risk of hepatic steatosis and cholestasis, and promote liver growth. Intestinal FGF-19 can also exert beneficial effects on glucose metabolism by increasing insulin sensitivity and inducing glycogen synthesis. Furthermore, FGF-19 can also promote protein synthesis, and lead to growth of lean body mass (Schaap, 2012; Reue, 2014).

The compositions of the invention may comprise MCFAs in an amount in the range of from 0 to 10 wt%, 0 to 8 wt%, a to 5 wt% or may be essentially free from MCFA.

In some embodiments of the invention, the synthetic nutritional composition comprises medium-chain fatty acids mainly in the form of triglycerides in a total amount in the range of 10 to 15 wt%, with respect to total fat; such as from 10.1 to 15%, from 10.5 to 15%, from 11 to 15%, from 12 to 15%, from 13 to 15%, from 14 to 15%, or for example from 10.1 to 14%, from 10.5 to 14%, or from 10.5 to 13%, or from 11 to 15%, or from 12 to 15%, all percentages by wt.

Further embodiments relate to a synthetic nutritional composition according to the invention, and wherein
- hexanoic acid is in an amount in the range of 0 to 1%, with respect with the total fat; such as for example 0.05 to 0.5 wt %, 0.05 to 0.4, 0.06 to 0.4, or 0.07 to 0.3 wt%;
- octanoic acid is in an amount in the range of 0 to 10%, such as with respect with the total fat; such as for example2 to 8%, 1.55 to 2 wt%, 1.6 to 2, 1.65 to 2, 1.7 to 2 wt%;
- decanoic acid is in an amount in the range of 0 to 10 wt % with respect with the total fat; such as for example 0 to 1.8, 0.1 to 1.8, 1 to 1.7, 1 to 1.5 or 1.2 to 1.8 wt%; and
- dodecanoic acid is in an amount in the range of 0 to 12.0 wt% with respect with the total fat, such as for example 0 to 10%, 0 to 8%, 0 to 6%, 0 to 4%; or for example 1 to 12%, 2 to 12%. 4 to 12%, 6 to 12%, 8 to 12%, 10 to 12%.

A further embodiment relates to a synthetic nutritional composition according to the invention, comprising medium-chain fatty acids mainly in the form of triglycerides, in a total amount in the range of 10.1 to 15 wt%, such as 10.5 to 15%, 11 to 15%, 12 to 15%, 13 to 15%, 14 to 15%, or for example 10.1 to 14%, 10.5 to 14%, or 10.5 to 13%, or 11 to 15%, or 12 to 15%, with respect to the total fat, and long chain fatty acids mainly in the form of triglycerides in a total amount in the range of 85 to 89.9 wt% with respect to the total fat, and wherein:
- hexanoic acid is in an amount in the range of 0 to 0.5 wt% with respect with the total fat;
- octanoic acid is in an amount in the range of 1.55 to 2 wt% with respect with the total fat;
- decanoic acid is in an amount in the range of 1 to 1.8 wt% with respect with the total fat; and
- dodecanoic acid is in an amount in the range of 8.0 to 12.0 wt% with respect with the total fat.

A yet further embodiment relates to a synthetic nutritional composition according to the invention, comprising medium-chain fatty acids mainly in the form of triglycerides, in a total amount in the range of 10.1 to 15 wt%, such as 10.5 to 15%, 11 to 15%, 12 to 15%, 13 to 15%, 14 to 15%, or for example 10.1 to 14%, 10.5 to 14%, or 10.5 to 13%, or 11 to 15%, or 12 to 15%, with respect to the total fat, and long chain fatty acids mainly in the form of triglycerides in a total amount in the range of 85 to 89.9 wt% with respect to the total fat, and wherein:
- hexanoic acid is in an amount in the range of 0.05 to 0.5 wt% with respect with the total fat;
- octanoic acid is in an amount in the range of 1.55 to 2 wt% with respect with the total fat;
- decanoic acid is in an amount in the range of 1 to 1.8 wt% with respect with the total fat; and
- dodecanoic acid is in an amount in the range of 8.0 to 12.0 wt% with respect with the total fat.

In a particularly advantageous embodiment of the invention, composition of the invention further comprises at least one polyunsaturated fatty acid (PUFA), the PUFA(s) being present in an amount generally of at least 0.1%, such as at least 8%, preferably at least 10%, with respect to the total fatty acids. Polyunsaturated fatty acids can be classified in various groups by their chemical structure. Among those PUFAS one may distinguish the omega-3 and omega-6 PUFAs.

Polyunsaturated omega-3 (ω-3 or n-3) fatty acids comprise alpha-linolenic acid (ALA) 18:3, stearidonic acid (SDA) 18:4, eicosatrienoic acid (ETE) 20:3, n-3 eicosatetraenoic acid (ETA) 20:4, eicosapentaenoic acid (EPA) 20:5, n-3 docosapentaenoic acid (DPA) 22:5, and docosahexaenoic acid (DHA) 22:6. In a particularly advantageous embodiment, the PUFAs according to the invention comprise alpha-linolenic acid, which is an essential fatty acid.

Polyunsaturated omega-6 (ω-6 or n-6) fatty acids comprise linoleic acid 18:2, gamma-linolenic acid (GLA) 18:3, n-6 eicosadienoic acid 20:2, dihomo-gamma-linolenic acid (DGLA) 20:3, arachidonic acid (AA or ARA) 20:4, n-6 docosadienoic acid 22:2, and docosapentaenoic acid 22:5. In a particularly advantageous embodiment, the PUFAs according to the invention comprise linoleic acid, which is an essential fatty acid.

In a particularly advantageous embodiment, the composition of the invention further contains at least one -PUFA, which is preferably a n-3 and/or a n-6 PUFA (that is to say a n-3 PUFA, a n-6 PUFA or, more preferably, a mixture of n-3 and n-6 -PUFA), the -PUFA(s) being present in an amount generally of at least 0.8 wt %, preferably at least 1.0 wt %, with respect to the total fatty acids. This leads (taking into consideration that the total fat comprises 90 to 96 wt % of fatty acids, see above) to an amount of at least about 0.8 wt %, preferably at least about 1.0 wt %, with respect to the total fat.

The n-3 -PUFA can be a C20 or a C22 n-3 fatty acid. The C20 or C22 n-3 -PUFA is advantageously present in an amount of at least 0.4 wt%, with respect to all the fatty acids in the composition. This leads to an amount of at least about 0.4 wt %, with respect to the total fat of the composition. Preferably the n-3 -PUFA is docosahexanoic acid (DHA, C22:6).

The n-6 -PUFA can be a C20 or a C22 n-6 fatty acid. The C20 or C22 n-6-PUFA is advantageously present in an amount of at least 0.4 wt% of all fatty acids in the composition. This leads to an amount of at least 0.4 wt %, with respect to the total fat of the composition. Preferably the n-6 -PUFA is arachidonic acid (ARA, C20:4).

In a particularly advantageous embodiment, the -PUFAs comprise at least 0.4 wt % of docosahexaneoic acid and at least 0.4 wt % of arachidonic acid, with respect to the total fatty acids.

The source of -PUFA may be, for example, egg lipids, fungal oil, low EPA fish oil or algal oil. The -PUFA of the composition of the invention may be provided in small amounts of oils containing high quantities of preformed arachidonic acid and docosahexaenoic acid such as fish oils or microbial oils.

The presence of -PUFAs is especially advantageous for several key health benefits such as cognitive benefits, visual and cognitive development, anti-inflammatory properties, as it is known in the art.

There are many reports in the literature suggesting that these fatty acids may be essential for optimal cognitive function development. Among its many roles, DHA influences the function of the blood-brain barrier, the activity of membrane-bound enzymes and ionic channels, dopaminergic and serotoninergic neurotransmission, and signal transduction (Yaboob, P Annu. Rev. Nutr. 2009.29:257-282).

### Fatty acids- palmitic acids

The presence of palmitic acid mainly in the form of triglycerides, when the palmitic acid being is esterified in the sn-2 position of the triglycerides, is especially advantageous.

However palmitic acid esterified in the sn-1,3 position of the triglycerides is often present in a high amount in some synthetic nutritional composition, for example in standard infant formula. When Sn 1,3 palmitic acid is digested, free fatty acids are released which form complexes with minerals, i.e. soaps. These soaps are not absorbable and are lost in faeces. This leads to mineral depletion as well as poor nutrient absorption. Thus, it is desired to have lower levels of sn 1,3 palmitic acid. In the synthetic nutritional composition of the present composition, the total levels of sn 1,3 palmitic acid are reduced, in part by the reduction in total amount of palmitic acid present in the compositions of the invention.

Without wishing to be bound by theory, it is believed that when non-absorbed palmitic acid soaps reach the ileum, they may stimulate the L cells to release the hormone GLP1, which is known to slow down gastric emptying rate. Thus, reducing the amount of palmitic acid soaps may contribute to the increased gastric emptying rate.

The nutritional composition of the invention comprises palmitic acid, at least 98%, such as more than 98.5%, or more than 99% or more than 99.5% in the form of triglycerides, in an amount in the range of not more than 13% with respect to total fat; such as from 0 to 12, 0 to 10, 0 to 9, 1 to 8, 2 to 6, 2 to 5, 2 to 4, 2 to 3.5 wt% palmitic acid.

In some embodiments, palmitic acid is present in an amount of from 2 to 5% wt , 2 to 4 wt% or 2.5 to 3.5 wt% with respect to total fat.

Further specific embodiments of the nutritional composition of the invention comprises no more than 7 wt% palmitic acid sn 1,3, with respect to total fat.

A further embodiment relates to nutritional composition of the invention wherein palmitic acid sn-2 represents from 15 to 30 wt% of total palmitic acid and wherein palmitic acid sn-1,3 represents from 70 to 75 wt% of total palmitic acid.

In some embodiments, the nutritional composition of the invention comprises palmitic acid sn 1,3 in an amount no more than 7 wt%, with respect to total fat, such as an amount from 0 to 7%, 1 to 7%, 1 to 6.5%, 1 to 6%; or such as from 2 to 7, 2 to 5, 2 to 4 wt%, or for example 3 to 7, 4 to 7, 5 to 7 or 6 to 7 wt%, with respect to total fat.

### Coconut oil

Further embodiments relate to the synthetic nutritional composition according to the invention wherein the composition comprises coconut oil in an amount in the range of 10 to 25% with respect to total fat.

One specific embodiment relates to a synthetic nutritional composition according to the invention comprising coconut oil in an amount in the range of 10 to 14, 10 to 12 wt% with respect to total fat.

Coconut oil contains a mix of medium chain fatty acids which is close to that found in human milk.

### The formulations- Fat blends

The fat blend is useful for preparing nutritional compositions, such as infant formulas, particularly infant formulas suitable for infants who were born preterm or with low-birth weight.

The fat blend may be the sole source of fat in an infant formula.

### Fatty acids- PUFAs

The composition according to the invention comprises a protein source and/or a carbohydrate source.

### Infant formula

In advantageous embodiments of the invention, the composition according to the invention is an infant formula, in particular a pre-term infant formula.

The synthetic nutritional compositions according to the invention may be for example an infant formula; a fortifier, such as a milk fortifier; a starter formula, a follow-on formula; or a supplement or complement. The synthetic nutritional composition of the invention may be in the form of a powder, liquid or concentrated liquid. The synthetic nutritional composition of the invention, e.g. an infant formula, may be a milk-based nutritional composition and may be based on a cow's milk, goat's milk or buffalo milk.

In some advantageous embodiments, the synthetic nutritional composition of the invention is an infant formula. The infant formula may be a starter formula generally for infants that are less than 6 months old or a follow-on formula generally for infants that are more than 6 months old. The composition of the invention may also be a fortifier such as a human milk fortifier.

In one particular embodiment, the synthetic nutritional composition according to the invention is adapted for enteral administration, for example enteral, oro-gastric or nasogastric administration. Administering the formula enterally contributes to stimulating gut maturation, and avoids the risks associated with parenteral feeding, such as line infections, gut atrophy and hepatobiliary disorders.

The quantities of all the components expressed herein as weight % (wt %) with respect to the total fat, reflect the amounts of some components of the fat present in the synthetic nutritional composition, to be consumed by the infant or young child. For example, the composition may be a powdered infant formula that is diluted with water to give a final liquid product. The composition according to the invention may also be a concentrated liquid that is diluted with water to achieve the final liquid product. The composition of the invention may be a liquid productthat is directly consumed by the infant as it is. The composition according to the invention may be a human milk fortifier that is added to or diluted with human milk. In this case, the concentration of the components already present in the human milk (to which the human milk fortifier is added) are to be taken as the average values for lactating mothers that are known or predicted from published clinical data.

The composition according to the present invention contains a source of lipids. The lipid source may be any lipid or fat which is suitable for use in infant formulae, as far as the content of MCFAs and LCFAs specific proportions meets the requirements of the invention. Preferred fat sources include palm oleic, high oleic sunflower oil and high oleic sunflower oil. The essential fatty acids linoleic and α-linolenic acid may also be added. In the composition, the fat source (including optional LC-PUFA such as ARA and/or DHA) preferably has a ratio of n-6 to n-3 fatty acids of about 1:2 to about 10:1, preferably about 5:1 to about 10:1, even more preferably about 7:1 to about 9:1.

The composition according to the invention is preferably such that the fat consists essentially of a mixture of 0 to 20% of milk fat; 10 to 15 % of coconut oil; 10 to 40% of canola oil; 10 to 25 % sunflower oil; 10 to 30% of high oleic sunflower oil; 2 to 10% of palmitic acid mainly in the form of triglycerides; and 1,5 to 2,5% of a mixture of poly-unsaturated fatty acids ARA and DHA (such as a mixture in 1:1 proportion of ARASCO^{®} and DHASCO^{®} from Martek), preferably in a ratio ARA:DHA of about 1:1, with respect to the total fat.

The milk fat could be replaced efficiently by Betapol^{®}, or by Infat^{®} from AAK/Enzymotec.

Each one of these fat sources is a refined oil suitable for infant nutrition applications.

Other standard ingredients known to the skilled person for formulating an infant formula, a fortifier or a growing-up milk may also be present in the compositions of the invention.

Thus, the composition of the invention may contain other ingredients which may act to enforce the technical effect of the components, particularly according to the Commission Directive 2006/141/EC of 22 December 2006 on infant formulae and follow-on formulae.

The composition according to the present invention can also contain a carbohydrate source, preferably as prebiotics, or in addition to prebiotics. Any carbohydrate source conventionally found in infant formulae such as lactose, saccharose, maltodextrin, starch and mixtures thereof may be used although the preferred source of carbohydrates is lactose.

The prebiotics that may be used in accordance with the present invention are not particularly limited and include all food substances that promote the growth of probiotics or health beneficial micro-organisms in the intestines. Preferably, they may be selected from the group consisting of oligosaccharides, optionally containing fructose, galactose, and mannose; dietary fibers, in particular soluble fibers, soy fibers; inulin; or mixtures thereof. Some examples of prebiotics are fructo-oligosaccharides (FOS), galacto-oligosaccharides (GOS), isomalto-oligosaccharides (IMO), xylo-oligosaccharides (XOS), arabino-xylo oligosaccharides (AXOS), mannan-oligosaccharides (MOS), inulin, polydextrose oligosaccharides of soy, glycosylsucrose (GS), lactosucrose (LS), lactulose (LA), palatinose-oligosaccharides (PAO), maltooligosaccharides, gums and/or hydrolysates thereof, pectins and/or hydrolysates thereof. In a particular embodiment, the prebiotics may be fructooligosaccharides and/or inulin. In a specific embodiment, the prebiotics is a combination of FOS with inulin such as in the product sold by BENEO-Orafti under the trademark Orafti^{®} oligofructose (previously Raftilose^{®}) or in the product sold by BENEO-Orafti under the trademark Orafti^{®} inulin (previously Raftiline^{®}). Another example is a combination of 70% short chain fructo-oligosaccharides and 30% inulin, which is registered by Nestle under the trademark "Prebio 1".

In one embodiment, the synthetic nutritional composition according to the invention doesn't comprise any prebiotic oligosaccharide.

The prebiotics can also be a BMO (bovine's milk oligosaccharide) and/or a HMO (human milk oligosaccharide) such as N-acetylated oligosaccharides, sialylated oligosaccharides, fucosylated oligosaccharides and any mixtures thereof.

A particular example of prebiotic is a mixture of galacto-oligosaccharide(s), N-acetylated oligosaccharide(s) and sialylated oligosaccharide(s) in which the N-acetylated oligosaccharide(s) represent 0.5 to 4.0% of the oligosaccharide mixture, the galacto-oligosaccharide(s) represent 92.0 to 98.5% of the oligosaccharide mixture and the sialylated oligosaccharide(s) represent 1.0 to 4.0% of the oligosaccharide mixture. This mixture is hereinafter referred to as "CMOS-GOS". For example a composition for use according to the invention can contain from 2.5 to 15.0 wt% CMOS-GOS on a dry matter basis with the proviso that the composition comprises at least 0.02 wt% of an N-acetylated oligosaccharide, at least 2.0 wt% of a galacto-oligosaccharide and at least 0.04 wt% of a sialylated oligosaccharide. WO2006087391 and WO2012160080 provide some examples of production of CMOS-GOS.

In particular, the human milk oligosaccharides, for example sialylated oligosaccharides, described in WO 2012/069416 published on May 31, 2012 may be included in the composition according to the invention.

Probiotic may be added to the composition according to the invention. All probiotic micro-organisms may be added additionally. Preferably, the probiotic may be selected for this purpose from the group consisting of Bifidobacterium, Lactobacillus, Lactococcus, Enterococcus, Streptococcus, Kluyveromyces, Saccharoymces, Candida, in particular selected from the group consisting of Bifidobacterium longum, Bifidobacterium lactis, Bifidobacterium animalis, Bifidobacterium breve, Bifidobacterium infantis, Bifidobacterium adolescentis, Lactobacillus acidophilus, Lactobacillus casei, Lactobacillus paracasei, Lactobacillus salivarius, Lactobacillus lactis, Lactobacillus rhamnosus, Lactobacillus johnsonii, Lactobacillus plantarum, Lactobacillus salivarius, Lactococcus lactis, Enterococcus faecium, Saccharomyces cerevisiae, Saccharomyces boulardii or mixtures thereof. Some suitable examples of probiotics are selected from the group consisting of Bifidobacterium longum NCC3001 (ATCC BAA-999), Bifidobacterium longum NCC2705 (CNCM 1-2618), Bifidobacterium longum NCC490 (CNCM 1-2170), Bifidobacterium lactis NCC2818 (CNCM 1-3446), Bifidobacterium breve strain A, Lactobacillus paracasei NCC2461 (CNCM 1-2116), Lactobacillus johnsonii NCC533 (CNCM 1-1225), Lactobacillus rhamnosus GG (ATCC53103), Lactobacillus rhamnosus NCC4007 (CGMCC 1.3724), Enterococcus faecium SF 68 (NCC2768; NCIMB10415), and mixtures thereof.

The composition according to the invention can also contain a protein source. The type of protein is not believed to be critical to the present invention provided that the minimum requirements for essential amino acid content are met and satisfactory growth is ensured. Thus, protein sources based on whey, casein and mixtures thereof may be used as well as protein sources based on soy. As far as whey proteins are concerned, the protein source may be based on acid whey or sweet whey or mixtures thereof and may include alpha-lactalbumin and betalactoglobulin in any desired proportions. The proteins can be at least partially hydrolyzed in order to enhancement of oral tolerance to allergens, especially food allergens. In that case the composition is a hypoallergenic composition.

In a preferred embodiment, the composition may be cow's milk whey based infant formula. The formula may also be a hypoallergenic (HA) formula in which the cow milk proteins are (partially or extensively) hydrolysed. The formula may also be based on soy milk or a non-allergenic formula, for example one based on free amino acids.

The composition of the invention can also contain all vitamins and minerals, and other micronutrients, understood to be essential in the daily diet and in nutritionally significant amounts. Minimum requirements have been established for certain vitamins and minerals. Examples of minerals, vitamins and other nutrients optionally present in the composition of the invention include vitamin A, vitamin B1, vitamin B2, vitamin B6, vitamin B12, vitamin E, vitamin K, vitamin C, vitamin D, folic acid, inositol, niacin, biotin, pantothenic acid, choline, calcium, phosphorous, iodine, iron, magnesium, copper, zinc, manganese, chlorine, potassium, sodium, selenium, chromium, molybdenum, taurine, and L-carnitine. Minerals are usually added in salt form. The presence and amounts of specific minerals and other vitamins will vary depending on the intended population.

If necessary, the composition of the invention may contain emulsifiers and stabilisers such as soy, lecithin, citric acid esters of mono- and di-glycerides, and the like.

The composition of the invention may also contain other substances which may have a beneficial effect such as lactoferrin, nucleotides, nucleosides, gangliosides, polyamines, and the like.

The preparation of the composition according to the invention will now be described by way of example.

The formula may be prepared in any suitable manner. For example, it may be prepared by blending together a protein source, a carbohydrate source, and a fat source, for example a lipid blend according to the invention including the MCFAs and LCFAs in appropriate proportions. If used, the emulsifiers may be included at this point. The vitamins and minerals may be added at this point but are usually added later to avoid thermal degradation. Any lipophilic vitamins, emulsifiers and the like may be dissolved into the fat source prior to blending. Water, preferably water which has been subjected to reverse osmosis, may then be mixed in to form a liquid mixture. The temperature of the water is conveniently in the range between about 50°C and about 80°C to aid dispersal of the ingredients. Commercially available liquefiers may be used to form the liquid mixture. The liquid mixture is then homogenized, for example in two stages.

The liquid mixture may then be thermally treated to reduce bacterial loads, by rapidly heating the liquid mixture to a temperature in the range between about 80°C and about 150°C for duration between about 5 seconds and about 5 minutes, for example. This may be carried out by means of steam injection, an autoclave or a heat exchanger, for example a plate heat exchanger.

Then, the liquid mixture may be cooled to between about 60°C and about 85°C for example by flash cooling. The liquid mixture may then be again homogenized, for example in two stages between about 10 MPa and about 30 MPa in the first stage and between about 2 MPa and about 10 MPa in the second stage. The homogenized mixture may then be further cooled to add any heat sensitive components, such as vitamins and minerals. The pH and solids content of the homogenized mixture are conveniently adjusted at this point.

The homogenized mixture is transferred to a suitable drying apparatus such as a spray dryer or freeze dryer and converted to powder. The powder should have a moisture content of less than about 5% by weight. Some of the carbohydrate may be added at this stage by dry-mixing along with optional probiotic bacterial strain(s), or by blending them in a syrup form of crystals, along with optional probiotic bacterial strain(s), and spray-dry (or freeze -dry).

If a liquid composition is preferred, the homogenized mixture may be sterilized then aseptically filled into suitable containers or may be first filled into the containers and then retorted.

In another embodiment, the composition of the invention may be a supplement in an amount sufficient to achieve the desired effect in an infant. This form of administration is usually more suited to preterm infants.

The amount of MCFAs and LCFAs to be included in the supplement will be selected according to the manner in which the supplement is to be administered.

The supplement may be in the form of powder, tablets, capsules, pastilles or a liquid for example, as long as it is a suitable nutritional composition for the infant. The supplement may further contain protective hydrocolloids (such as gums, proteins, modified starches), binders, film forming agents, encapsulating agents/materials, wall/shell materials, matrix compounds, coatings, emulsifiers, surface active agents, solubilizing agents (oils, fats, waxes, lecithins etc.), adsorbents, carriers, fillers, co-compounds, dispersing agents, wetting agents, processing aids (solvents), flowing agents, taste masking agents, weighting agents, jellifying agents and gel forming agents. The supplement may also contain conventional pharmaceutical additives and adjuvants, excipients and diluents, including, but not limited to, water, gelatine of any origin, vegetable gums, ligninsulfonate, talc, sugars, starch, gum arabic, vegetable oils, polyalkylene glycols, flavouring agents, preservatives, stabilizers, emulsifying agents, buffers, lubricants, colorants, wetting agents, fillers, and the like.

The supplement can be added in a product acceptable to the consumer (who is an infant), such as an ingestible carrier or support, respectively. Examples of such carriers or supports are a pharmaceutical or a food composition. Examples for such compositions are infant formula including preterm formula.

Further, the supplement may contain an organic or inorganic carrier material suitable for enteral or parenteral administration as well as vitamins, minerals trace elements and other micronutrients in accordance with the recommendations of Government bodies such as the European Commission Directive 2006/141/EC of 22 December 2006 on infant formulae and follow-on formulae.

### Target groups

The composition can be given immediately after birth of the infants. The composition of the invention can also be given during the first week of life of the infant, or during the first 2 weeks of life, or during the first 3 weeks of life, or during the first month of life, or during the first 2 months of life, or during the first 3 months of life, or during the first 4 months of life, or during the first 6 months of life, or during the first 8 months of life, or during the first 10 months of life, or during the first year of life. In some other embodiments, the composition of the invention is given few days, or few weeks, or few months after birth.

In one embodiment the composition of the invention is given to the infant as a supplementary composition to the mother's milk. In one embodiment the composition is given to the infant as the sole or primary nutritional composition during at least one period of time, e.g. after the 1st, 2nd or 4th month, during at least 1, 2, 4 or 6 months. In some embodiments the infant receives the mother's milk during at least the first 2 weeks, first 1, 2, 4, or 6 months. In one embodiment the composition of the invention is given to the infant after such period of mother's nutrition, or is given together with such period of mother's milk nutrition.

### Uses of nutritional composition

FGF-19 (fibroblast growth factor 19) is an intestinal hormone which can reduce the risk of hepatic steatosis and cholestasis, and promote liver growth. Intestinal FGF19 can also exert beneficial effects on glucose metabolism, by increasing insulin sensitivity and inducing glycogen synthesis. This hormone can also promote protein synthesis, and lead to growth of lean body mass (Schaap, 2012; Reue, 2014).

The invention relates to the composition according to the invention for use to promote the maturation of the liver and/or to reduce the risk of liver disease. Preterm and critically ill infants and young children suffer from intolerance to enteral feeds. Feeding intolerance prompts health care provides to interrupt enteral feeds and supply nutrition by parenteral nutrition.

The present invention thus relates to a synthetic nutritional composition according to claim 1 in reducing the accumulation of gastric residuals, and/or improving the tolerance to enteral feeds, and/or reducing the risk of regurgitation and/or vomiting in infants with LBW or who were born preterm. Specific embodiments relate to nutritional composition for use according to the invention wherein the use is in preterm infants, even more specifically in LBW infants. In one embodiment, the infant or young child may be critically ill.

Preterm infants are at increased risk of insulin resistance, hyperglycemia, poor nutrient utilization, impaired lean body mass growth, fat accumulation in the visceral area and metabolic disease later in life.

Liver function is immature in preterm infants, and is hepatic dysfunction is frequent in preterm infants, affection up to 50% of extremely low birth weight (ELBW) infants.

Thus, the invention relates to a synthetic nutritional composition according to the invention for use in promoting liver maturation, or reducing the risk of liver disease in an infant with LBW or who were born preterm. In a particular embodiment, the synthetic nutritional composition according to the invention is for use in preterm infants, even more specifically in LBW preterm infants.

### Examples

### Example 1

A cross-over study was designed where each subject received all test meals. Subjects were randomly assigned to one of 10 possible randomized sequences of the 5 test products. Each subject received the 5 study products during 5 different visits, separated by at least 1 -week washout, and at most 4 weeks. Each visit spread over two days (D-1 and D0):
- Day -1 for getting standardized meals
- Day 0 for:
   - Baseline plasma samples
   - Study product intake
   - Plasma samples - Breath samples

The subjects were healthy males from 20 to 40 years old with a BMI of 19 to 24.9 kg m⁻², and which had a normal fasting glycemia.

### Study description

The five study products contained the same amount of maltodextrins and whey protein, but differed in their fatty acid composition. All study products contain a third of each subject's daily energy requirement, as determined by the Harris Benedict equation multiplied by a factor 1.5 to account for physical activity.
1. Maltodextrin (43% TEI)+whey proteins (WP, 12% TEI)
2. Maltodextrin (43% TEI)+WP (12% TEI)+MUFA (39% TEI)+PUFA (6% TEI)
3. Maltodextrin (43% TEI)+WP (12% TEI)+MUFA (27% TEI)+MCT (12% TEI)+PUFA (6% TEI)
4. Maltodextrin (43% TEI)+ WP (12% TEI)+MUFA (12% TEI)+MCT (27% TEI)+PUFA (6% TEI)
5. Maltodextrin (43% TEI)+WP (12% TEI) + MCT(39% TEI)+PUFA (6% TEI).

(TEI= total energy intake; WP= whey proteins; MUFA= Monounstaturated fatty acids; PUFA=Polyunsaturated fatty acids; MCT=medium chain triglycerides) See also Table 1 for composition of meals.

100 mg of 13C-octanoate (Eurisotope, St Aubin, France) was added to each study product to monitor gastric emptying.

### Table 1: Fatty acid profile of study products

Meals are per-subject isocaloric, except for M1 which is the fat-free reference diet and has similar carbohydrate and protein content to the other meals, but no lipid. All other meals one third of each subject's daily energy requirement, M2 and M3 are dominated by oleic acid, M4 and M5 by MCT.

**Table 1**

| | **Meal 2** | **Meal 3** | **Meal 4** | **Meal 5** |
|---|---|---|---|---|
| Total Fatty acid methyl esters (FAME) (g/100g fat) | 90.24 | 91.53 | 85.21 | 87.30 |
| Saturates (g/100g product) | 0.90 | 2.50 | 6.4 | 8.10 |
| Mono unsaturates (g/100g product) | 8.60 | 7.40 | 2 | 1.30 |
| Poly unsaturates (g/100g product) | 1.60 | 1.80 | 1.4 | 1.30 |
| **(g/100g fat)** | | | | |
| C6:0, Hexanoic | 0.00 | 0.00 | 0.00 | 0.00 |
| C8:0, Octanoic | 0.00 | 7.31 | 29.04 | 35.53 |
| C10:0, Decanoic | 0.00 | 5.57 | 22.34 | 27.07 |
| C12:0, Dodecanoic | 0.00 | 0.09 | 0.21 | 0.18 |
| C14:0, Myristic | 0.06 | 0.07 | 0.07 | 0.05 |
| C16:0, Palmitic | 3.61 | 3.34 | 2.33 | 2.11 |
| C16:1 n-7, Palmitoleic | 0.12 | 0.12 | 0.05 | 0.00 |
| C18:0, Stearic | 2.51 | 2.13 | 1.08 | 1.04 |
| C18:1 n-9, Oleic | 69.13 | 57.18 | 17.11 | 10.24 |
| C18:2 n-6, Linoleic | 10.49 | 10.67 | 10.15 | 9.40 |
| C18:3 n-3, alpha-Linoleic | 2.26 | 3.20 | 2 | 1.07 |
| C20:0, Arachidic | 0.31 | 0.31 | 0.14 | 0.09 |
| C20:1 n-9, Eicosenoic | 0.51 | 0.57 | 0.25 | 0.06 |
| **Total MCT** | **0.00** | **12.97** | **51.59** | **62.78** |
| **Total essential FA** | **12.75** | **13.87** | **12.15** | **10.47** |
| **Total LCFA** | **88.94** | **77.52** | **33.11** | **24.01** |

**Table 2 Composition of Meal 1 (M1)**

| | **Lipid compositi on (% final oil mix)** | **% of TEI** | **Amount per diet (g)** | **Amount per 100g (m/m)** |
|---|---|---|---|---|
| **Meal 1** | | | | |
| maltodextrin (≈3 wt% water) | | 43 | 107,50 | 24,57 |
| Whey protein | | 12 | 30,00 | 6,86 |
| Water to add | | | 300,00 | 68,57 |
| **Total without additives (kg)** | | | **437,50** | **100,00** |
| TS final beverage (% m/m) | | | | 31% |
| Masking LG | | | | 0,19 |
| Stevia | | | | 0,01 |
| Strawberry aroma | | | | 0,08 |

**Table 3: Composition of Meal 2 (M2)**

| | **Lipid composition (% final oil mix)** | **% of TEI** | **Amount per diet (g)** | **Amount per 100g (m/m)** |
|---|---|---|---|---|
| **Meal 2** | | | | |
| maltodextrin | | 43 | 107,50 | 24,57 |
| Whey protein | | 12 | 30,00 | 6,86 |
| MCT 40% emulsion incl. Citrem | | | 0,00 | 0,00 |
| *lipids* | 0 | 0 | 0,00 | 0,00 |
| *emulsion water* | | | 0,00 | 0,00 |
| Soybean oil 40% emulsion incl. Citrem | | | 0,00 | 0,00 |
| *lipids* | 0 | 0 | 0,00 | 0,00 |
| *emulsion water* | | | 0,00 | 0,00 |
| Canola oil 40% emulsion incl. Citrem | | | 37,50 | 8,57 |
| *lipids* | 30 | 14 | 15,00 | 3,43 |
| *emulsion water* | | | 21,00 | 4,80 |
| High oleic sunflower oil 40% emulsion incl. Citrem | | | 87,50 | 20,00 |
| *lipids* | 70 | 32 | 35,00 | 8,00 |
| *emulsion water* | | | 49,00 | 11,20 |
| Total Citrem (4% m/m emulsion) | | | 5,00 | 1,14 |
| Water to add | | | 175,00 | 40,00 |
| **Total without additives (kg)** | | | **437,50** | **100,00** |
| TS final beverage (% m/m) | | | | 43% |
| Masking LG | | | | 0,19 |
| Stevia | | | | 0,018 |
| Strawberry aroma | | | | 0,08 |

**Table 4: Composition of Meal 3 (M3)**

| | **Lipid compositi on (% final oil mix)** | **% of TEI** | **Amount per diet (g)** | **Amt per 100g (m/m)** |
|---|---|---|---|---|
| **Meal 3** | | | | |
| maltodextrin | | 43 | 107,50 | 24,57 |
| Whey protein | | 12 | 30,00 | 6,86 |
| MCT 40% emulsion incl. Citrem | | | 20,00 | 4,57 |
| *lipids* | 16 | 7,2 | 8,00 | 1,83 |
| *emulsion water* | | | 11,20 | 2,56 |
| Soybean oil 40% emulsion incl. Citrem | | | 0,00 | 0,00 |
| *lipids* | 0 | 0 | 0,00 | 0,00 |
| *emulsion water* | | | 0,00 | 0,00 |
| Canola oil 40% emulsion incl. Citrem | | | 52,50 | 12,00 |
| *lipids* | 42 | 18,9 | 21,00 | 4,80 |
| *emulsion water* | | | 29,40 | 6,72 |
| High oleic sunflower oil 40% emulsion incl. Citrem | | | 52,50 | 12,00 |
| *lipids* | 42 | 19 | 21,00 | 4,80 |
| *emulsion water* | | | 29,40 | 6,72 |
| Total Citrem (4% m/m emulsion) | | | 5,00 | 1,14 |
| Water to add | | | 175,00 | 40,00 |
| **Total without additives (kg)** | | | **437,50** | **100,00** |
| TS final beverage (% m/m) | | | | 43% |
| Masking LG | | | | 0,19 |
| Stevia | | | | 0,01 |
| Strawberry aroma | | | | 0,08 |

**Table 5: Composition of Meal 4 (M4)**

| | **Lipid composition (% final oil mix)** | **% of TEI** | **Amount per diet (g)** | **Amount per 100g (m/m)** |
|---|---|---|---|---|
| **Meal 4** | | | | |
| maltodextrin | | 43 | 107,50 | 24,57 |
| Whey protein | | 12 | 30,00 | 6,86 |
| MCT 40% emulsion incl. Citrem | | | 83,75 | 19,14 |
| *lipids* | 67 | 30,15 | 33,50 | 7,66 |
| *emulsion water* | | | 46,90 | 10,72 |
| Soybean oil 40% emulsion incl. Citrem | | | 22,50 | 5,14 |
| *lipids* | 18 | 8,1 | 9,00 | 2,06 |
| *emulsion water* | | | 12,60 | 2,88 |
| Canola oil 40% emulsion incl. Citrem | | | 18,75 | 4,29 |
| *lipids* | 15 | 6,75 | 7,50 | 1,71 |
| *emulsion water* | | | 10,50 | 2,40 |
| High oleic sunflower oil 40% emulsion incl. Citrem | | | 0,00 | 0,00 |
| *lipids* | 0 | 0 | 0,00 | 0,00 |
| *emulsion water* | | | 0,00 | 0,00 |
| Total Citrem (4% m/m emulsion) | | | 5,00 | 1,14 |
| Water to add | | | 175,00 | 40,00 |
| **Total without additives (kg)** | | | **437,50** | **100,00** |
| TS final beverage (% m/m) | | | | 43% |
| Masking LG | | | | 0,19 |
| Stevia | | | | 0,01 |
| Strawberry aroma | | | | 0,08 |

**Table 6: Composition of Meal 5 (M5)**

| | **Lipid composition (% final oil mix)** | **% of TEI** | **Amount per diet (g)** | **Amount per 100g (m/m)** |
|---|---|---|---|---|
| **Meal 5** | | | | |
| maltodextrin | | 43 | 107,50 | 24,57 |
| Whey protein | | 12 | 30,00 | 6,86 |
| MCT 40% emulsion incl. Citrem | | | 97,50 | 22,29 |
| *lipids* | 78 | 35,1 | 39,00 | 8,91 |
| *emulsion water* | | | 54,60 | 12,48 |
| Soybean oil 40% emulsion incl. Citrem | | | 27,50 | 6,29 |
| *lipids* | 22 | 10 | 11,00 | 2,51 |
| *emulsion water* | | | 15,40 | 3,52 |
| Canola oil 40% emulsion incl. Citrem | | | 0,00 | 0,00 |
| *lipids* | 0 | 0 | 0,00 | 0,00 |
| *emulsion water* | | | 0,00 | 0,00 |
| High oleic sunflower oil 40% emulsion incl. Citrem | | | 0,00 | 0,00 |
| *lipids* | 0 | 0 | 0,00 | 0,00 |
| *emulsion water* | | | 0,00 | 0,00 |
| Total Citrem (4% m/m emulsion) | | | 5,00 | 1,14 |
| Water to add | | | 175,00 | 40,00 |
| **Total without additives (kg)** | | | **437,50** | **100,00** |
| TS final beverage (% m/m) | | | | 43% |
| Masking LG | | | | 0,19 |
| Stevia | | | | 0,01 |
| Strawberry aroma | | | | 0,08 |

### Study

On the day of the kinetic, the participants came fasted. There were no other diet restrictions.

The beverage was served at room temperature in an opaque cup with a cover to be consumed orally within 5-10 minutes.

Blood samples were drawn time points starting from 1 hr before intake of the beverage, and during the 4 hours of the study (See further figure 1 for overview of study).

### Gastric emptying

In brief, 100 mg of ¹³C-octanoate was dissolved into the test meals on the evening preceding the test to ensure complete homogeneous dissolution of the tracer. On the day of the metabolic investigation, two baseline breath samples were collected in 3 glass vacutainers at times -30 and -15 min prior to the meal ingestion. All test meals were ingested in less than 10 minutes, and time zero was defined as the end of food ingestion. Breath samples were collected at times 15, 30, 45, 60, 75, 90, 105, 120, 150, 180, 210 and 240 minutes using Easy Sampler Device and Crimp Tubes from QuinTron (Milwaukee, Wisconsin, USA)

Breath ¹³CO₂ samples were analyzed for ¹³C enrichment using an isotope ratio mass spectrometer (IRMS, Delta V Advantage, Thermo, Bremen, Germany) device hyphenated to a gas chromatography system (GC Trace, Thermo, Bremen, Germany). The analyses were performed to assess the ¹³CO₂/¹²CO₂ ratio (expressed as δ¹³C, ‰). CO₂ standard gas was calibrated against international standard allowing ¹³C/¹²C ratio to be quoted against the Vienna Pee De Belemnite (VPDB).

Data were transformed using non linear equations according to Ghoos et al (2) using the R software to calculate non-linear curve fitting. The parameter T50Meas is derived from these equations and represents the time in minutes when half of the stomach's content has been emptied.

Figure 2 shows the T50Meas results for the different meals studied. As expected, the meal more rapidly emptyied from the stomach was M1, as it did not contain any fat. Interestingly, within the fat-containing meals M2 and M3, i.e. those meals which have no or low MCT, had a faster gastric emptying than M4 and M5.

### FGF-19

FGF-19 (fibroblast growth factor 19) is an intestinal hormone which can reduce the risk of hepatic steatosis and cholestasis, and promote liver growth. This hormone can alsoexert beneficial effects on glucose metabolism by increasing insulin sensitivity and inducing glycogen synthesis. Furthermore, FGF-19 can also promote protein synthesis, and lead to growth of lean body mass (Schaap, 2012; Reue, 2014).

FGF19 was measured by ELISA using commercial kit from R&D Systems.

The results show FGF-19 is more stimulated in M3 and M2, i.e. those meals which are have low or no MCT oil content induce significantly higher levels of FGF_19 as compared to control. The meals M4 and M5 were not significantly different from control.

See also Figure 3 and 5.

### CCK and bile acids

Cholecystokinin (CCK) is an intestinal hormone key to the digestive process as it induces the secretion of the bile acids and pancreatic enzymes required for the digestion of a meal. This hormone also appears to stimulate the maturation of the exocrine pancreas.

CCK was measured by RIA by using a commercial kit from Ray Biotech. Total bile acids were measured by a colorimetric enzymatic assay by using a commercial kit from Bio Supply.

The results show that CCK is more stimulated in M3 and M2, i.e. those meals which are have low or no MCT oil content induce significantly higher levels of CCK as compared to control. By contrast, the meals M4 and M5 induced a lower secretion of CCK as compared to control. Accordingly, bile acids levels were also significantly increased by the M2 and M3 meals only. See also Figures 4, 6 and and 7,8.

### Creaming experiments

Experiments were performed to validate the gastric emptying method.

Method: Samples of each test product (M1- M5) were mixed in equal proportion with simulated gastric juice, which consisted of 2 mg/mL NaCl and 4.5 mg/mL pepsin at 37 °C and a pH of 1.9. The physical distribution of fat throughout each mixture was assessed by measuring optical turbidity as a function of sample height (every 30 um) over time at 37°C using a Turbiscan^{™} LAB.

The results are presented below in Table 7. Meal 3 was diluted to test how sstable it was (Meal 3 (-10%)).

**Table 7: In vitro meal coagulation test results**

| **Meal** | | **Mixing ratio (meal to SGF)** | **Creaming rate** | **Cream layer height (% of total sample height)** |
|---|---|---|---|---|
| | **Meal 2** | 1:1 | ∼ 50 um min-1 | 96.5% |
| | **Meal 3** | 1:1 | ∼ 1000 um min-1 | 61.9% |
| | **Meal 3 - 10%** | 9:1 | ∼ 10 um min-1 | 100% |
| | **Meal 4** | 1:1 | ∼ 300 um min-1 | 74% |
| | **Meal 5** | 1:1 | ∼ 50 um min-1 | 93.3% |

Conclusions: Meals 2 and 5 displayed no phase separation. Meals 3 and 4 displayed modest creaming, which was due to fat particle aggregation. Such separation in the stomach will be relatively minor and have only a modest effect on gastric emptying. No effect on gastric empting is anticipated for Meals 2, 4, 5.

### Example 2A:

**Table 8: Example of a lipid blend according to the invention**

| Ingredients | Variant 1: No Milk Fat | |
|---|---|---|
| MCT Oil | - | |
| Palm Olein | - | |
| Milk Fat | - | |
| Betapol-55 | **15.00** | |
| Coconut Oil | **20.00** | |
| Canola Oil | **32.21** | |
| Sunflower Oil | **16.17** | |
| High Oleic Sunflower Oil | **14.38** | |
| ARASCO/DHASCO 1:1 | **1.00** | |
| ARASCO/DHASCO 2:1 | **1.25** | |
| | | |
| Palmitic Acid (% of total fat) | **8.10** | |
| Palmitic Acid sn-2 (% of palmitic acid) | **27.30** | |
| Palmitic Acid sn-1,3 (% of palmitic acid) | **72.70** | |
| Palmitic Acid sn-2 (% of total fat) | **2.20** | |
| Palmitic Acid sn-1,3 (% of total fat) | **5.90** | |

### Example 2B:

**Table 9: Example of lipid blend according to the invention**

| Ingredients | Variant 2: No Betapol-55 |
|---|---|
| MCT Oil | - |
| Palm Olein | - |
| Milk Fat | **15.00** |
| Betapol-55 | **0.00** |
| Coconut Oil | **20.00** |
| Canola Oil | **22.87** |
| Sunflower Oil | **18.28** |
| High Oleic Sunflower Oil | **21.59** |
| ARASCO/DHASCO 1:1 | **1.00** |
| ARASCO/DHASCO 2:1 | **1.25** |
| Palmitic Acid (% of total fat) | **7.80** |
| Palmitic Acid sn-2 (% of palmitic acid) | **20.30** |
| Palmitic Acid sn-1,3 (% of palmitic acid) | **79.70** |
| Palmitic Acid sn-2 (% of total fat) | **1.60** |
| Palmitic Acid sn-1,3 (% of total fat) | **6.20** |

### Example 3:

An example of the composition of an infant formula according to the invention is given in the below Table 11.

**Table 11: example of an infant formula according to the invention**

| Nutrient | per 100kcal | per litre |
|---|---|---|
| Energy (kcal) | 100 | 670 |
| Protein (g) | 1.83 | 12.3 |
| Fat (g) = fat blend of example 2 a) or of example 2 b) | 5.3 | 35.7 |
| Linoleic acid (g) | 0.79 | 5.3 |
| α-linoleic acid (mg) | 101 | 675 |
| Lactose (g) | 11.2 | 74.7 |
| Minerals (g) | 0.37 | 2.5 |
| Na (mg) | 23 | 150 |
| K (mg) | 89 | 590 |
| Cl (mg) | 64 | 430 |
| Ca (mg) | 62 | 410 |
| P (mg) | 31 | 210 |
| Mg (mg) | 7 | 50 |
| Mn (µg) | 8 | 50 |
| Se (µg) | 2 | 13 |
| Vitamin A (µg RE) | 105 | 700 |
| Vitamin D (µg RE) | 1.5 | 10 |
| Vitamin E (mg TE) | 0.8 | 5.4 |
| Vitamin K1 (µg) | 8 | 54 |
| Vitamin C (mg) | 10 | 67 |
| Vitamin B1 (mg) | 0.07 | 0.47 |
| Vitamin B2 (mg) | 0.15 | 1.0 |
| Niacin (mg) | 1 | 6.7 |
| Vitamin B6 (mg) | 0.075 | 0.50 |
| Folic acid (µg) | 9 | 60 |
| Pantothenic acid (mg) | 0.45 | 3 |
| Vitamin B12 ((µg) | 0.3 | 2 |
| Biotin (µg) | 2.2 | 15 |
| Choline (mg) | 10 | 67 |
| Fe (mg) | 1.2 | 8 |
| I (µg) | 15 | 100 |
| Cu (mg) | 0.06 | 0.4 |
| Zn (mg) | 0.75 | 5 |

## Claims

1. A synthetic nutritional composition capable of being emptied more rapidly from the stomach upon consumption in an individual comprising, with respect to the total fats:
- medium-chain fatty acids, at least 98% in the form of triglycerides, in an amount in the range of 0 to 15 wt%,
- oleic acid, at least 98% in the form of triglycerides, in an amount of at least 35 wt%, in respect of total fat;
- palmitic acid, at least 98% in the form of triglycerides, in an amount in the range of not more than 13%;
wherein said synthetic nutritional composition is an infant formula; a fortifier; a starter formula; a follow-on formula; or a supplement or complement; further comprising a protein source and/or a carbohydrate source;
for use to promote the maturation of the liver, or to reduce the risk of liver disease in a preterm infant born at less than 37 weeks gestational age, or in a low birth weight infant having a body weight under 2500 g at birth.

2. The composition for use according to claim 1 in reducing the accumulation of gastric residuals, and/or improving the tolerance to enteral feeds, and/or reducing the risk of regurgitation and/or vomiting in infants.

## Patentansprüche

1. Synthetische Nährstoffzusammensetzung, die bei dem Verzehr in einem Individuum schneller aus dem Magen entleert werden kann, umfassend, bezogen auf die Gesamtfette:
- mittelkettige Fettsäuren, mindestens 98 % in Form von Triglyceriden, in einer Menge im Bereich von 0 bis 15 Gew.-%,
- Oleinsäure, mindestens 98 % in Form von Triglyceriden, in einer Menge von mindestens 35 Gew.-%, bezogen auf das Gesamtfett;
- Palmitinsäure, mindestens 98 % in Form von Triglyceriden, in einer Menge im Bereich von nicht mehr als 13 %;
wobei die synthetische Nährstoffzusammensetzung eine Säuglingsformel; ein Anreicherungsmittel; eine Anfangsnahrung; eine Folgenahrung; oder ein Ergänzungsmittel oder Komplement ist; ferner umfassend eine Proteinquelle und/oder eine Kohlenhydratquelle;
zur Verwendung bei der Förderung der Leberreifung oder zur Verringerung des Risikos einer Lebererkrankung bei einem Frühgeborenen, das in einem Gestationsalter von weniger als 37 Wochen geboren wurde, oder bei einem Säugling mit geringem Geburtsgewicht, der bei der Geburt ein Körpergewicht von weniger als 2500 g hat.

2. Zusammensetzung zur Verwendung gemäß Anspruch 1 zur Verringerung der Ansammlung von gastrischen Überresten und/oder zur Verbesserung der Toleranz gegenüber enteralen Nahrungsmitteln und/oder zur Verringerung des Risikos des Hochwürgens und/oder Erbrechens bei Säuglingen.

## Revendications

1. Composition nutritionnelle synthétique susceptible d'être évacuée plus rapidement de l'estomac lors de la consommation chez un individu comprenant, par rapport aux matières grasses totales :
- des acides gras à chaîne moyenne, au moins 98 % sous la forme de triglycérides, en une quantité dans la plage de 0 à 15 % en poids,
- de l'acide oléique, au moins 98 % sous forme de triglycérides, en une quantité d'au moins 35 % en poids par rapport à la matière grasse totale ;
- de l'acide palmitique, au moins 98 % sous la forme de triglycérides, en une quantité dans la plage n'excédant pas 13 % ;
dans laquelle ladite composition nutritionnelle synthétique est une préparation pour nourrissons ; un fortifiant ; une préparation de premier âge, une préparation de suite; ou un supplément ou complément ; comprenant en outre une source de protéines et/ou une source de glucides ;
pour utilisation pour promouvoir la maturation du foie, ou pour réduire le risque de maladie du foie chez un enfant prématuré né à moins de 37 semaines d'âge gestationnel, ou chez un enfant de faible poids à la naissance dont le poids corporel est inférieur à 2 500 g à la naissance.

2. Composition pour utilisation selon la revendication 1 dans la réduction de l'accumulation de résidus gastriques, et/ou l'amélioration de la tolérance aux alimentations entérales, et/ou la réduction du risque de régurgitation et/ou de vomissement chez des nourrissons.
